# EUROPÄISCHE PATENTSCHRIFT

(11) **EP 0 406 634 B1**
(45) Veröffentlichungstag und Bekanntmachung des Hinweises auf die Patenterteilung: **13.07.1994**
(21) Anmeldenummer: 90111807.5
(22) Anmeldetag: 22.06.1990
(51) Int. Cl.: C08J 9/18, C08G 75/02

(54) **Verfahren zur Herstellung eines hochtemperaturbeständigen TSG- Schaumes aus Polyarylensulfiden**
Process for the preparation of high temperature resistant foams of polyarylensulphides for thermoplastic injection molding processes
Procédé pour la préparation de mousses résistantes à hautes températures de polysulfures d'arylène pour des procédés de moulage par injection thermoplastique

(30) Priorität: 05.07.1989 DE 3922038
(43) Veröffentlichungstag der Anmeldung: 09.01.1991
(73) Patentinhaber: BAYER AG, 51368 Leverkusen (DE)
(72) Erfinder: Stahlke, Kurt-Rainer, Dr., D-5067 Kürten (DE); Bushong, William, Dr., Pittsburgh, PA 15205 (US)

(56) Entgegenhaltungen:
- FR-A- 2 379 370
- FR-A- 2 379 910
- US-A- 4 263 409

## Beschreibung

Die Erfindung betrifft ein Verfahren zur Herstellung eines TSG-Schaumes Polyarylensulfiden (PAS), vorzugsweise Polyphenylensulfid (PPS).

Es ist bekannt thermoplastische Spritzgußmassen durch Verwendung chemischer oder physikalischer Treibmittel unter Aufschäumen im thermoplastischen Spritzguß-Verfahren (TSG-Verfahren) zu Formkörpern oder Extrudaten zu verarbeiten.

Im low pressure structual foam-Verfahren (LPSF-Verfahren) hergestellte Formkörper zeigen jedoch nur eine geringe Dichtereduktion von 2-3 Gew.-% % (Plastic Design Forum Juli/August 1988). Eine weitere Möglichkeit im TSG-Verfahren hergestellte Teile zu erhalten wird in EP-A-251 108 beschrieben. Dieses Verfahren beinhaltet jedoch größere chemische Modifikationen (Sulfoncarbonate, Katalysatoren, Erhitzen).

Üblicherweise werden im TSG-Verfahren hergestellte Formkörper oder Extrudate jedoch hergestellt, indem man ein Treibmittel-Konzentrat zudosiert (z.B. Makrolon Polycarbonate Structural Foam brochure, Mobay Chemical Corp. 1985). Die Verwendung von Treibmittel-Konzentraten ist jedoch oft eingeschränkt, da bei der Herstellung von Konzentraten dieses noch nicht aufschäumen darf. Andererseits muß ein chemisches Treibmittel sich bei dem TSG-Verfahren gezielt zersetzen, sodaß ein Formkörper mit möglichst gleichmäßiger Porenstruktur entsteht. Es ist dadurch gewährleistet, daß es bei ungleichmäßiger Schaum-Struktur nicht zu mechanischen Schwachstellen kommen kann.

Die Verwendung von chemischen Treibmitteln zur Herstellung hochtemperaturbeständiger geschäumter Thermoplaste ist aus oben genannten Gründen bisher nicht erfolgreich gewesen.

Es wurde nun überraschenderweise gefunden, daß sich hochtemperaturbeständige thermoplastische Formmassen in einem einfachen Verfahren herstellen lassen.

Gegenstand der Erfindung ist ein Verfahren zur Herstellung eines TSG-Schaumes, dadurch gekennzeichnet, daß innerhalb von 10 bis 40 Minuten Polyarylensulfide mit 0,1 bis 5 Gew.% eines Treibmittelkonzentrates homogenisiert werden, welches 0,2 bis 10 Gew.% eines Treibmittels enthält und als Basisharz für dieses Masterbatch ein hochtemperaturbeständiges, teilkristallines oder amorphes Polycarbonat mit einer relativen Viskosität in CH₂Cl₂ bei 25° C und 0,5g pro 100 ml von 1.260_1.285 verwendet wird und dann bei 300 bis 360° C im Spritzguß oder Extrusionsverfahren der Polyarylensulfidschaum hergestellt wird. Das Verfahren beruht auf der Verwendung von Polyarylensulfiden (PAS), vorzugsweise Polyphenylensulfid (PPS), gegebenenfalls in Abmischung mit Füllstoffen zur Herstellung eines TSG-Schaumes.

Erfindungsgemäß verwendbare Polyarylensulfide sind bekannt, z.B. US-A 3 354 129, EP-A 171 021 und handelsüblich, z.B. TEDUR®.

Zur Herstellung des Schaumes können die Polyarylensulfide mit 0 bis 80 Gew.-%, vorzugsweise gegebenenfalls 40-60 Gew.-%, (bezogen auf Polyarylensulfid) Füllstoffen abgemischt werden. Als Füllstoffe können organische und anorganische Füllstoffe eingesetzt werden, z.B. Glasfasern, Glaskugeln, Silikate wie Glimmer, Talk, Carbonate wie ein Magnesiumcarbonat, Sulfate wie BaSO₄, CaSO₄, Oxide wie TiO₂, Kohlefasern, Aramidfasern, Kohlenstoff, Metalle, z.B. als Fasern usw.

Bei der Herstellung des Schaumes wird ein Treibmittelkonzentrat (Masterbatch) verwendet. Dieses enthält 0,2 - 10 Gew.-% eines chemischen Treibmittels, vorzugsweise 3 - 5 Gew-%. Als Basisharz für dieses Masterbatch dient ein hochtemperaturbeständiger, teilkristalliner oder amorpher Thermoplast, vorzugsweise ein Polycarbonat wie Makrolon® mit einer relativen Viskosität (in CH₂Cl₂, 25°C/0,5 g pro 100 ml) von 1.260 - 1.285.

Dieses Treibmittel-Konzentrat wird in Mengen von 0,1 - 5 Gew.-% (bezogen auf PAS), vorzugsweise 0,8 - 1,5 Gew.-% dem Polyarylensulfid als Trockenmischung zugegeben. Dann wird 10 - 40 Minuten, vorzugsweise 15-25 Minuten auf einem Rollbock gemischt (homogenisiert).

Als chemische Treibmittel dienen zum Verschäumen übliche Substanzen, z.B. Azoverbindungen wie Azodicarbonamid, Anhydride wie Itaconsäureanhydrid, Azole wie 5-Phenyltetrazol usw. Zur Beschleunigung des Zerfalls können übliche "Kicker", beispielsweise Zinkoxid, eingesetzt werden.

Die Herstellung des Polyarylensulfid-Schaumes erfolgt bei für Polyarylensulfid üblichen Verarbeitungstemperaturen von 300 - 360°C (Spritzguß oder Extrusionsverfahren) an der Luft unter atmosphären Druck. Gegebenenfalls kann in Abwesenheit von O₂ unter Inertgas (z.B. N₂) gearbeitet werden.

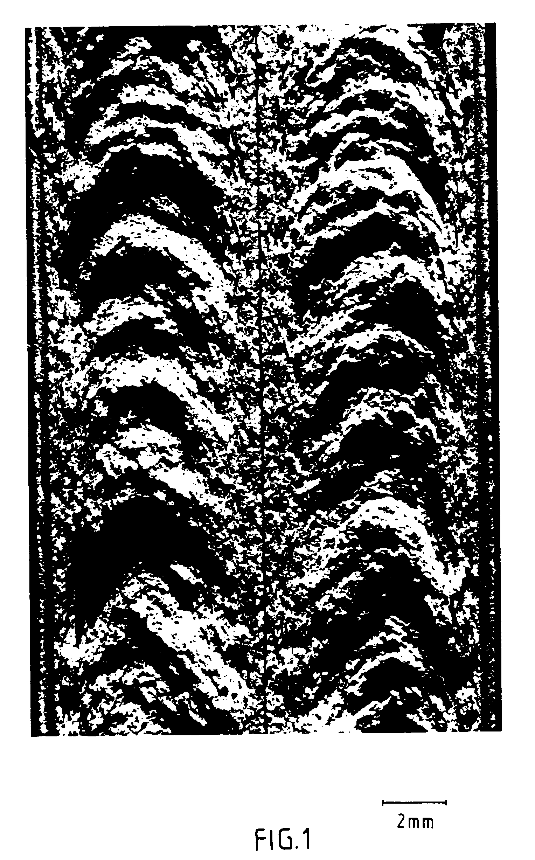

Im TSG-Verfahren hergestellte Formkörper aus oben angegebenen Mischungen weisen eine gleichmäßige Zellstruktur auf (siehe Figur 1), wobei die typische Schicht eines Strukturschaumes mit gleichmäßiger Zellstruktur zu beobachten ist. Es wird eine Dichtereduktion im Formkörper von 35 - 50 Gew.-%, vorzugsweise 40 - 45 Gew.-% erhalten.

Erfindungsgemäß hergestellte Formkörper zeigen die von Polyarylensulfiden bekannten Eigenschaften, wie hohe Temperaturbeständigkeit, Steifigkeit, Chemikalienresistenz und niedrige Entflammbarkeit.

Eingesetzt werden diese Strukturschäume dort, wo es neben den von Polyarylensulfiden her bekannten Eigenschaften zusätzlich um eine Gewichtsreduzierung, thermische Isolation sowie gute Flammschutzeigenschaften geht. Es werden vorzugsweise großflächige Formteile hergestellt, welche lange Fließwege erlauben und keinerlei Einfallstellen aufweisen.

Anwendungen für erfindungsgemäß hergestellte Formkörper liegen im Luftfahrt- sowie Fahrzeugmarkt, im Bereich großflächiger Trennwände zur thermischen Isolation sowie im chemischen Anlagen- und Apparatebau.

Es können ebenfalls Extrudate wie Rohre und andere Hohlkörper hergestellt werden. Alle Formkörper und Extrudate lassen sich mit bekannten Technologien beschichten, metallisieren, verkleben oder durch Einlegen von Metallteilen oder Folien in einer Spritzgußform hinterspritzen.

### Beispiele

### Beispiel 1

Es werden 10 kg eines nach EP-A 171 021 hergestellten Polyphenylensulfides, welches mit 40 Gew.-% einer handelsüblichen Glasfaser ausgerüstet ist, mit 1 Gew.-% eines Konzentrates aus einem handelsüblichen Polycarbonat der rel. Viskosität von 1.280 und 4 Gew.-% 5-Phenyl-tetrazol versetzt und 20 Min. auf einen Rollbock vermischt. Anschließend wird auf einer Standardspritzgußmaschine unter den für das TSG-Verfahren üblichen Bedingungen verarbeitet.

Man erhält einen TSG-Schaum mit gleichmäßiger Porenstruktur einer Porengröße von etwa 0,05 bis 0,5 mm (s. Fig. 1) und einem spez. Gewicht von 0,90 g/cm³. Bei einem eingesetzten Grundharz mit dem spez. Gewicht von 1,65 g/cm/³ entspricht dies einer Dichtereduktion von 45,5 Gew.-%.

Die erhaltenen geschäumten Formkörper weisen eine Biegefestigkeit von 120 N/mm², eine Randfaserdehnung von 1,9 %, einen Biege E-Modul von 9000 N/mm² sowie eine Schlagfestigkeit von 10 kg/cm² auf.

Die Wärmeformbeständigkeit HDT-A (1,81 N/mm²) beträgt 200°C. Die UL 94 (8 mm) Klassifizierung ergibt VO (eigene Messungen).

### Beispiel 2

Es wird ein in Beispiel 1 beschriebenes Harz mit 3 Gew.-% eines in Beispiel 1 beschriebenen Treibmittelkonzentrates auf einem Rollbock 20 Minuten gemischt. Es trat eine Gewichtsreduzierung an spritzgegossenen Fertigteilen von 50 Gew.-% auf (Dichte = 0,84 g/cm³).

## Patentansprüche

1. Verfahren zur Herstellung eines TSG-Schaumes, dadurch gekennzeichnet, daß innerhalb von 10 bis 40 Minuten Polyarylensulfide mit 0,1 bis 5 Gew.% eines Treibmittelkonzentrates homogenisiert werden, welches 0,2 bis 10 Gew.% eines Treibmittels enthält und als Basisharz für dieses Masterbatch ein hochtemperaturbeständiges, teilkristallines oder amorphes Polycarbonat mit einer relativen Viskosität in CH₂Cl₂ bei 25° C und 0,5 g pro 100 ml von 1.260_1.285 verwendet wird und dann bei 300 bis 360° C im Spritzguß oder Extrusionsverfahren der Polyarylensulfidschaum hergestellt wird.

## Claims

1. Process for the production of a thermoplastic structural foam for injection moulding, characterised in that polyarylene sulphides are homogenised within 10 to 40 minutes with 0.1 to 5 wt.% of a blowing agent concentrate, which contains 0.2 to 10 wt.% of a blowing agent, and the base resin used for this masterbatch is a high temperature resistant, partially crystalline or amorphous polycarbonate with a relative viscosity in CH₂Cl₂ of 1.260-1.285 at 25°C and 0.5 g per 100 ml, and the polyarylene sulphide foam is then produced by injection moulding or extrusion at 300 to 360°C.

## Revendications

1. Procédé pour la préparation d'une mousse moulée par injection thermoplastique (TSG), caractérisé en ce que l'on homogénéise en 10 à 40 min des polysulfures d'arylènes avec 0,1 à 5 % en poids d'un concentré d'agent porogène qui contient 0,2 à 10 % en poids d'un agent porogène et on utilise comme résine de base pour ce mélange maître un polycarbonate partiellement cristallin ou amorphe, résistant à haute température, ayant une viscosité relative à 25°C et à 0,5 g/100 ml dans CH₂Cl₂ de 1,260-1,285 et ensuite on prépare la mousse de polysulfure d'arylène dans le procédé d'injection ou d'extrusion à 300-360°C.
